# EUROPEAN PATENT SPECIFICATION

(11) **EP 0 498 997 B1**
(45) Date of publication and mention of the grant of the patent: **04.06.1997**
(21) Application number: 91311707.3
(22) Date of filing: 17.12.1991
(51) Int. Cl.: H04M 1/57

(54) **Telephone apparatus with calling line identification**
Telefonapparat mit Anruferidentifikation
Téléphone avec identification de l'appeleur

(30) Priority: 11.01.1991 GB 9100656
(43) Date of publication of application: 19.08.1992
(73) Proprietor: NOKIA MOBILE PHONES (U.K.) LIMITED, Camberley, Surrey GU15 3SP (GB)
(72) Inventor: Martensson, Nils Erik, Woking, Surrey GU22 0QG (GB)
(74) Representative: Frain, Timothy John

(56) References cited:
- EP-A- 0 355 777
- DE-A- 3 128 529
- US-A- 4 304 968
- US-A- 4 873 719
- US-A- 4 924 496

## Description

This invention relates to a telephone apparatus adapted to respond to a signal conveying a number identifying the source of an incoming telephone call. Specifically the identifying number may be the telephone number of the telephone making the incoming call.

It is known, for example in the context of cellular radio telephone systems, for the subscriber number of the telephone from which a call is originated to be transmitted in binary code to the telephone receiving the call. This is known in the art as Calling Line Identification (CLI).

Prior art telephones have been adapted to respond to CLI signals and have been provided with a facility for displaying the telephone numbers of incoming calls. Hence the user can see the telephone number before answering the call. A so-called 'call-in-absence' memory has also been provided for storing the telephone numbers of incoming calls which have not been answered within a predetermined period of time. The stored numbers can be recalled at a later time so that the user has a record of calls received but not answered.

GB-A-2014825 discloses a telephone apparatus in which the number of a caller is stored in a memory and can be recalled at a later stage if the call is not answered initially.

It is also already known to supply a portable telephone having a memory in which telephone numbers can be stored with an associated word to provide a directory. Such a telephone is disclosed in the "Technophone TP2 Users Guide".

A drawback with prior art telephones is that because the system conveys only the telephone number of the incoming call, it is only the telephone number which is displayed to the user. The telephone number alone is of limited value because it can be difficult for the user to recognize telephone numbers, especially those which are used less frequently.

US 4924496 discloses an automatic incoming telephone call number display system for detecting an incoming call and identifying the party associated with the incoming call number. The system includes a directory of telephone numbers and parties associated with those numbers. Circuitry detects the origin telephone number of an incoming telephone call and compares that number with numbers in the directory for identifying the calling party. A display permits the user to view the incoming call number and party associated with that number.

DE 3128529 discloses a method for displaying call information on a telephone device. The call number of a calling telephone device is compared with the memory of the call receiving device. If a match is found for the call number, information associated with the call number is displayed.

EP 355777 discloses a communication apparatus including a reception unit for receiving discrimination information for discriminating a calling party terminal equipment; a memory for storing the information received by the reception unit if no response is made to the call reception; and an output unit for visually outputting the information stored in the memory.

US 4304968 discloses a telephone electronic answering device (TEAD), interfaced to the standard telephone mechanism, resembles a pocket calculator in size and shape and receives and records messages sent to it from a caller's telephone. It receives either dual tone frequencies or rotary dial pulses fed from the caller's telephone, converts such signals into the caller's telephone number, searches for the caller's name indicated by the same phone number stored in memory and records the caller's name, telephone number and time of call in memory.

According to the present invention there is provided a telephone apparatus comprising a keypad including a plurality of alphanumeric keys; the alphanumeric keys each having at least two characters associated therewith, one of said at least two characters being a numeric character and the other one of said at least two characters being an alphanumeric character; a memory means storing a plurality of telephone number records each telephone number record having a numeric field for storing a telephone number in encoded form and a text field for storing associated alphanumeric characters in encoded form; a display means; wherein in a first data entry mode the numeric character associated with one of said alphanumeric keys is stored in encoded form in one of said numeric fields in response to pressing said one alphanumeric key, and in a second data entry mode the alphanumeric character associated with said one alphanumeric key is stored in encoded form in one of said text fields, associated with said one numeric field, in response to pressing said one alphanumeric key, said one numeric field and said one associated text field being in the same record; the apparatus is a portable radio telephone and further comprises means (i) adapted to respond to a signal conveying a number identifying the source of an incoming call supplied automatically by the telephone by selecting the telephone number record in the memory means that contains, in the selected record's numeric field, the encoded number corresponding to the number identifying the source of the incoming call, and (ii) then displaying on the display means the alphanumeric characters stored in encoded form in the text field for the selected record.

In the present specification the term 'field' relates to a portion of memory intended for storing a specific item of data of a given type such as a telephone number (numeric characters only) or a name (alphabet or alphanumeric characters). A 'record' comprises a collection of individual fields linked by a common feature, e.g. all items of data (fields) relating to the same telephone number.

A telephone apparatus in accordance with the invention has the advantage that it can display to the user not only the telephone number, but also associated textual information, for example the name of the caller, stored in the memory means. The user is thus able to recognize far more readily the identity of the caller.

Suitably the display means are adapted to display the telephone number in addition to the associated text information. Depending on the constraints of the display itself (e.g. maximum number of characters), the telephone number and the associated text may be displayed either simultaneously or intermittently.

The display means may also be adapted to indicate that no text is available if the text field associated with the selected numeric field contains an empty code. For example, the location of the selected numeric field may be displayed. This will tell the user that the incoming call originated from a number stored in the memory means, although no text is associated with the number in question.

Additionally the display means may be adapted to indicate, e.g. by means of a suitable message, when the numeric fields do not contain a number in encoded form corresponding to the number identifying the source of the incoming call.

Preferably, the telephone apparatus comprises a keypad enabling data to be entered selectively by the user into the numeric and/or associated text fields. This gives the user the flexibility to store the telephone numbers of his or her choice and to append to these a so-called alpha-tag (i.e. text data) such as, for example, the name of the subscriber. The alpha-tag will then be displayed to the user whenever a call is received from the associated number.

An embodiment of the invention will now be described, by way of example, with reference to the accompanying drawings, in which:-
Figure 1 is a perspective view of a portable cellular telephone in accordance with the invention,
Figure 2 is a schematic diagram of the main features in the telephone of Figure 1,
Figure 3 is a schematic diagram showing the structure and organisation of the telephone number store of the telephone in Figure 2,
Figure 4 is a schematic diagram of one of the records in the telephone number store in Figure 3, and
Figure 5 is a flowchart depicting a set of steps, which may be used by the microcomputer in the telephone in Figure 2 insofar as implementation of the telephone number store is concerned.

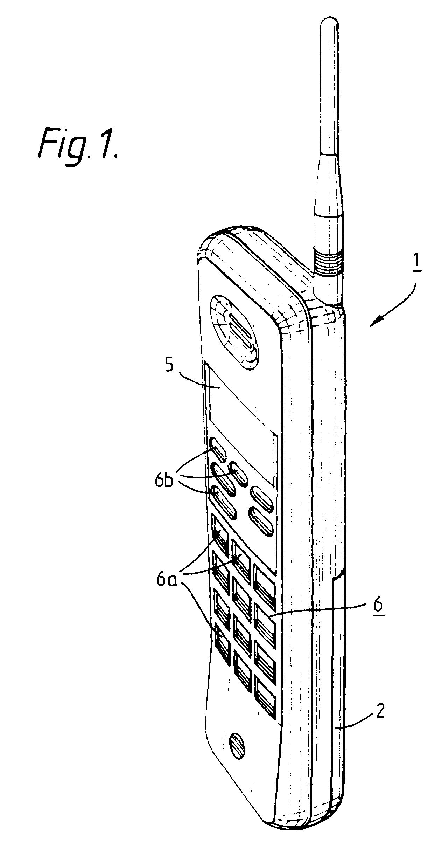

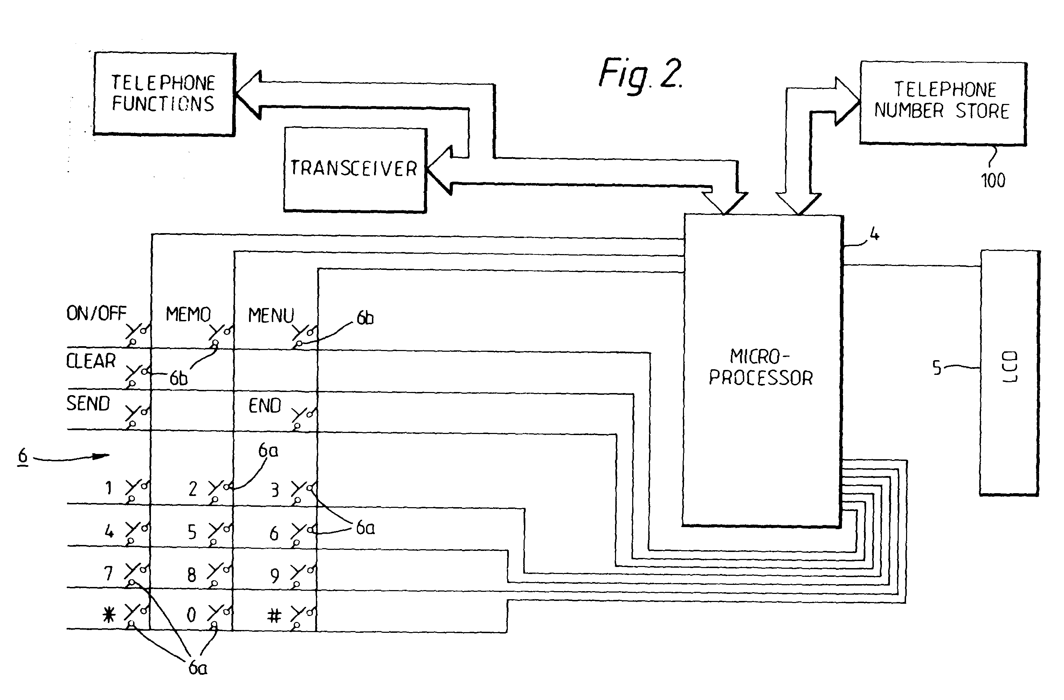

The telephone apparatus shown in Figure 1 is a portable cellular telephone 1 powered by a rechargeable battery pack 2. The telephone 1 includes a transceiver and all the other features conventionally found in a cellular telephone, as shown schematically in Figure 2. Since these aspects of the telephone are not directly relevant to the instant invention no further details will be given here, except to say that a microprocessor 4 (see Figure 2) is employed to control all the basic functions of the telephone 1 and to control the keypad and display functions. Alternatively, however, the telephone functions may be controlled by a master microcomputer, while the keypad and display functions are under the control of a separate slave microcomputer coupled to communicate with the master microcomputer. Additionally a memory 100 is provided for storing subscriber telephone numbers, as described in more detail below.
The user-interface of telephone 1 comprises a display, e.g. a liquid crystal display 5, itself well-known in the art and a keypad 6 on the front of the telephone 1. The display is coupled to and regulated by the microprocessor 4 in the usual manner. The keypad 6 essentially comprises two main sets of keys, namely alphanumeric keys 6a associated with alphanumeric data especially for dialing telephone numbers, but also for entering alphanumeric data into the telephone number store 100; and a set of function keys 6b for enabling various predetermined functions or operations.

The keys 6a are arranged in four rows of three keys each. As is conventional for the numeric key layout of a telephone, the top row comprises keys for numbers 1, 2 and 3 respectively, the second row down for numbers 4, 5 and 6 respectively, the next row down for numbers 7, 8 and 9 respectively, and the bottom row for *, 0 and # respectively. The keys 6a are also associated with alphabet information, as again is quite conventional. The alphabetic rather than numeric data is selected for example by preceding the alphanumeric keystroke with another predetermined keystroke or set of keystrokes, specifically using the function keys in the data entry mode as discussed in more detail below.

As is usual in cellular telephones, the keys 6b include a "SEND" and "END" key for respectively initiating and terminating a telephone call. Another key, specifically located in the top left-hand corner is an "ON/OFF" key for turning the telephone on and off, i.e. by connecting and disconnecting the battery pack power supply. Another of the function keys may be a menu or function key labeled, for example, "MENU" or "FUNCTION" or with a suitable abbreviation thereof. Depression of this key enables a variety of pre-set menus, the related instructions of which are stored in memory, to be viewed and selectively enabled. The various menus are selected by depressing the appropriate alphanumeric keys after depressing the "MENU" or "FUNCTION" key. The relevant menu is shown to the user in words or abbreviations on the display panel 5. For example, the user may be able to select the ringing tone by appropriate menu selection.

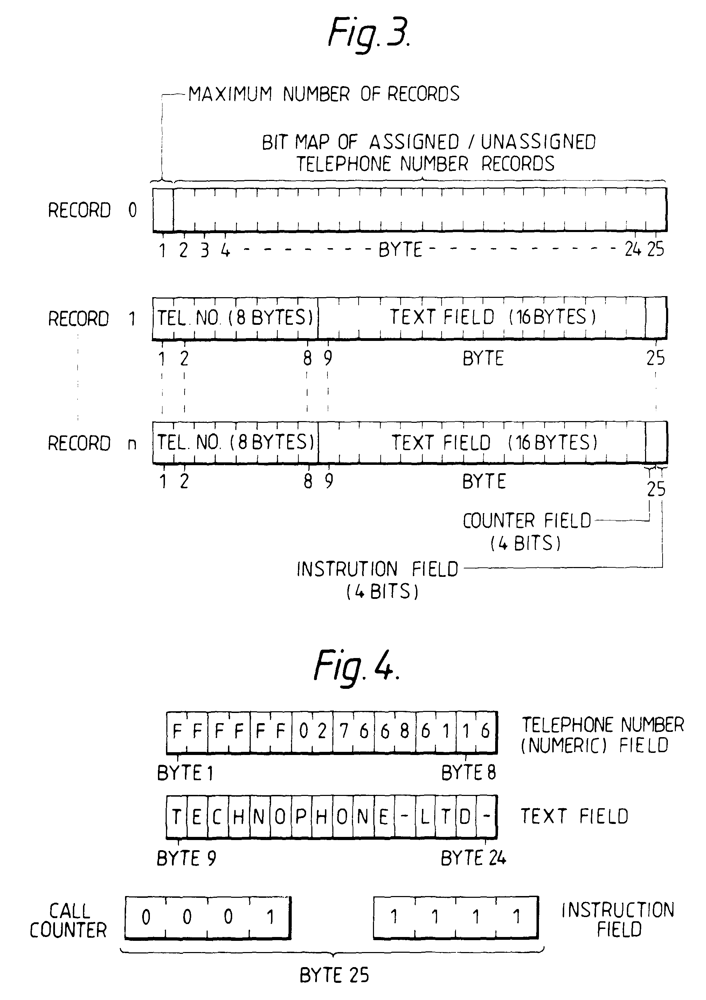

The organization of the memory, suitably an EEPROM, constituting the telephone number store 100 will now be described with reference to Figure 3.

The telephone number store comprises n+1 records, each record having a length of 25 bytes (200 bits). Record 0 is merely an information record and contains information on the size and allocation of the telephone number store. This record is the first in the memory 100 and constitutes record number 0, i.e. abbreviated subscriber number 0. The header, like the n other records, has a length of 25 bytes and is structured as follows. The first byte is used to store the maximum number of records in the telephone number store, and the remaining 24 bytes are used as a bit map to indicate unassigned and assigned records. For example a binary "1" indicates an unassigned record and binary "0" indicates an assigned record. To this end the first telephone number record (Record 1) is represented by the most significant bit (bit 8) in byte 2 (i.e. abbreviated subscriber number 1), whilst the last subscriber number record (maximum 192) is represented by the least significant bit (bit 1) in byte 25 of the header.

The n subscriber number records each consist of a numeric field 8 bytes long for storing the directory number; a text field, which is 16 bytes long, for storing any accompanying optional text, such as the name of the subscriber; a counter field 4 bits (¹/₂ byte) long; and an instruction field also 4 bits (¹/₂ byte) long.

The subscriber number is stored right-justified in the "numeric" field (bytes 1 to 8) and filled to the left with "F" (in hexadecimal), as shown in Figure 4 for the telephone number 0276 686116. In the case of an empty or deleted subscriber number record, the numeric field (bytes 1 to 8) is filled with F's (hexadecimal).

The text is stored left-justified in the text field (bytes 9 to 24) and filled to the right with spaces, ASCII code "20" (hexadecimal), as shown in Figure 4 for the words "TECHNOPHONE LTD". In the case of an empty or deleted record, the text field (bytes 9 to 24) is filled with ASCII code spaces "20" (hexadecimal).

The counter field (the four most significant bits of byte 25) stores the number of times a call has been received from the telephone number contained in that record. So, for example, as shown in Figure 4 a call has been received from the telephone number 0276 686116 once before.

The instruction field (the four least significant bits of byte 25) are available for storing special instructions to modify the manual operation of the telephone. If this field is empty (0000) the operation of the telephone will proceed uninterrupted in the normal manner. However, special instructions may be programmed into this field by the user from the keyboard. For example, in Figure 4 the code 1111 is used as a "TELEPHONE BUSY" instruction which can be used to block calls from selected telephone numbers, as described in more detail below.

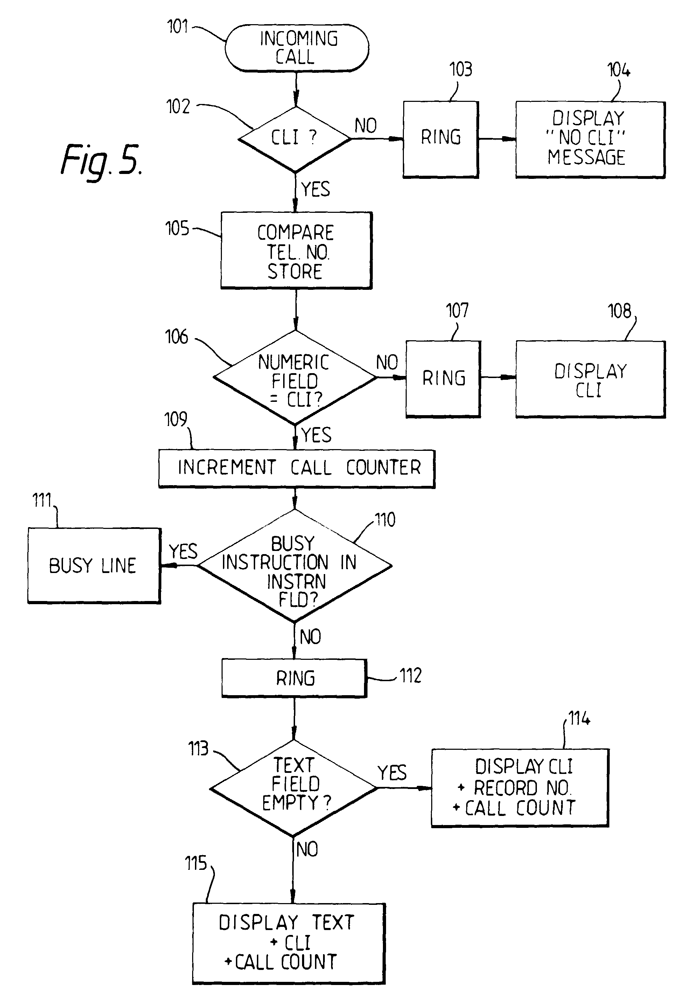

Figure 5 is a flowchart which may be used to implement the operation of the microprocessor 4 of Figure 2 insofar as use of the telephone number store 100 is concerned. The flowchart begins at block 101 when the portable telephone receives an incoming call. At block 102 the telephone establishes the telephone number of the caller if a calling line identification (CLI) signal is present. If there is no CLI signal the flow proceeds to block 103 where the telephone is rung and the call will proceed in the conventional manner. Also, as indicated at block 104, the telephone may display a message such as "NO CLI" to indicate that no CLI information is available.

On the other hand, if a CLI signal is present, the telephone number will be established in known manner and the flow will proceed from block 102 to block 105. The telephone numbers stored in the numeric fields of the telephone number store 100 are compared with the CLI number. If none of the stored numbers match the CLI number, see block 106, the flow proceeds to block 107. The telephone is rung and the CLI number is displayed on the display, as illustrated at block 108. Additionally a message such as "NOT IN MEMORY" may be displayed to indicate to the user that the number of the incoming calls is not stored in memory 100.

The CLI number may remain on the display for reference purposes even after the call has been answered and the user may have the opportunity to permanently transfer the displayed number into the telephone number store 100 while the call is in progress. To this end, e.g. by pressing any of the alphanumeric keys 6a, the message on the display changes, for example to "STORE?". At this point the user can confirm that he wishes to store the displayed number by pressing a "STORE" key disposed among the keys 6b. In response the display 5 will show the first available record or memory location. The user may store the number at that or indeed at any other available location of his choice, and also store text to accompany the telephone number, e.g. the caller's name, in accordance with the general procedure for entering data as discussed in greater detail below. If the user does not press the "STORE" key while the "STORE?" message is displayed the CLI number will not be transferred into the telephone number store 100.

On the other hand, if one of the records in the telephone number store 100 is found at block 106 to contain in its numeric field a number corresponding to the CLI, then the counter field of that record will be incremented by one unit as shown at block 109. Thus if the current state of the call counter was 0001 for the selected record as shown in Figure 4, the counter would be incremented to 0010.

Flow then proceeds to block 110 at which a check is made on the state of the instruction field. If this contains a "BUSY SIGNAL" instruction, e.g. 1111, then the telephone will respond with a busy (engaged) signal, indicated at block 111, as if the telephone were in use. Hence the telephone has a call screening facility, which permits calls from selected telephone numbers to be blocked. The caller will receive a busy or engaged tone.

If, at block 110, the instruction field is found to be empty (contents (0000)), flow will proceed to block 112 and the telephone will be rung. Then, at block 113, a check is made on the text field of the selected record. If the text field does not contain any information (i.e. 16xF(hex)) the telephone number stored in the numeric field of the selected record will be displayed on LCD 5, as indicated at block 114. Also, the record number will be displayed, e.g. in the form "RECORD 99", thus giving the user the maximum amount of information available, in the absence of text, which may help to identify the caller. Additionally the display will show a message indicating the number of times a call has been received from the same telephone number since the call counter was last cleared. This message may, for example, be in the form "CALL COUNT: 2", indicating that this is the second call which has been received from the number displayed. The three items of information, i.e. the CLI number, the record number, and the call count may be displayed simultaneously if the capacity of the display permits, or the various items of information may be displayed sequentially.

If, at block 113, the text field is found to contain information, then the flow proceeds to block 115 and the telephone will display the text stored in encoded form in the text field of the selected record, e.g. "TECHNOPHONE LTD", see Figure 4. Also, the CLI number viz. 0276 686116 in this case, may be displayed together with the call count, e.g. in the form "CALL COUNT: 2".

All of the information contained in the telephone number store 100 may be entered or programmed by the user from the keypad 6. For example, the store mode may be accessed by pressing the "STORE" key disposed among the keys 6b. The user then enters the desired telephone number up to 16 digits long using the alphanumeric keys 6a. To store the number the "STORE" key is pressed again. In response the display 5 will show the keyed telephone number e.g. 0276 686116, followed by the first available record or memory location, indicated for example as "RECORD 005", assuming records 001 through 004 are already assigned. The record number can be changed at this stage using the "#" key to scroll up to the next location (record 006), or using the "*" key to reach the previous location (record 004). Alternatively, the number keys 6a may be pressed to enter a specific location, e.g. by pressing the key "9" twice for record number 99. The "STORE" key is pressed to store the entered number at the desired location. The display then returns a prompt such as "ENTER NAME". At this stage the alphabet function of the numeric keys 6a is enabled. In general each number key has three sequential alphabetic characters associated therewith. For example the key "8" also has the letters "T", "U" and "V" associated with it. Thus, at the "ENTER NAME" stage, a single press of the numeric key will display the first letter (i.e. "T" for the "8" key), two key presses will display the second letter (i.e. "U" for the "8 key"), and three key presses will display the third letter (i.e. "V" for the "8" key). A fourth key press displays the number itself. Further key presses cause this sequence to be repeated. Hence upto 16 alphanumeric characters can be entered into the text field using the alphanumeric keys 6a. The text characters are stored by pressing the "STORE" key once again. If the "STORE" key is pressed before any text has been entered the text field will be left empty. Whether or not text has been entered the last "STORE" keypress will cause the display to show a further prompt such as "BUSY ON", indicating the status of the instruction in the instruction field. This instruction can be toggled between "BUSY ON" and "BUSY OFF" using for example either the "#" or "*" keys. As indicated above, "BUSY OFF" will store 0000 in the instruction field of the selected record permitting calls originating from that number to proceed in the normal manner, whereas "BUSY ON" will store 1111 in the instruction field of the selected record causing a busy or engaged signal whenever a call is received from the subscriber number stored in that record.

Pressing the "STORE" key once more will store all the data which has just been entered in the chosen location and the display will return to its normal state.

The user may at any time review what calls have been received using the "MENU" key. For example by pressing the "MENU" key followed by "5" the display may show the message "REVIEW CALLS". To enable this feature the user presses, for example, the "STORE" (or "ENTER") key. On the other hand by pressing the "#" or "*" keys the message toggles between "REVIEW CALLS" and "ERASE CALL COUNT". If the "STORE" (or "ENTER") key is pressed while the "ERASE CALL COUNT" message is displayed, the counter fields of all records will be reset to zero (0000). On the other hand if the "STORE" (or "ENTER") key is pressed while the "REVIEW CALLS" message is displayed, the display will show the first record which has a non-zero call count, for example: "0276 686116 TECHNOPHONE LTD CALL COUNT: 2". By pressing the "#" key the display will show the next record which has a non-zero call count. Successive records with a non-zero call count can thus be recalled by repeatedly pressing the "#" key. When all records with a non-zero call count have been displayed they will be displayed again in rotation as the "#" key is pressed repeatedly again. The non-zero call-count records can be reviewed in reverse order by pressing the "*" key.

In view of the foregoing it will be evident to a person skilled in the art that various modifications may be made within the scope of the present invention. For example the telephone number store may be implemented and configured in any suitable manner. Furthermore, a telephone in accordance with the present invention need not necessarily include a call counter facility or a call screening facility in which case less memory space is required. Thus, for example in the memory configuration described above each record may comprise only 24 rather than 25 bytes without loss of any alphanumeric storage space. Also, it is noted the present invention is applicable to telephone apparatuses other than portable cellular telephones.

## Claims

1. Telephone apparatus (1) comprising:
a keypad (6) including a plurality of alphanumeric keys (6a); the alphanumeric keys (6a) each having at least two characters associated therewith, one of said at least two characters being a numeric character and the other one of said at least two characters being an alphanumeric character;
a memory means (100) storing a plurality of telephone number records each telephone number record having a numeric field for storing a telephone number in encoded form and a text field for storing associated alphanumeric characters in encoded form;
a display means (5);
wherein in a first data entry mode the numeric character associated with one of said alphanumeric keys is stored in encoded form in one of said numeric fields in response to pressing said one alphanumeric key, and in a second data entry mode the alphanumeric character associated with said one alphanumeric key is stored in encoded form in one of said text fields, associated with said one numeric field, in response to pressing said one alphanumeric key, said one numeric field and said one associated text field being in the same record;
characterised in that the apparatus is a portable radio telephone and further comprises means
(i) adapted to respond to a signal conveying a number identifying the source of an incoming call supplied automatically by the telephone network by selecting the telephone number record in the memory means that contains, in the selected record's numeric field, the encoded number corresponding to the number identifying the source of the incoming call, and
(ii) then displaying on the display means (5) the alphanumeric characters stored in encoded form in the text field for the selected record.

2. Telephone apparatus as in Claim 1, wherein the keypad (6) also includes a function key (6b) operable when depressed to switch between the two data entry modes.

3. Telephone apparatus as claimed in Claims 1 or 2, wherein the memory means (100) also stores an information record containing information about other records in the memory means (100).

4. Telephone apparatus as claimed in Claim 3, wherein a first byte of the information record stores a value of a maximum number of records that can be stored in the memory means (100).

5. Telephone apparatus as claimed in Claim 4, wherein the information record comprises a bit map to indicate unassigned and assigned records.

6. Telephone apparatus as claimed in any of the preceding claims, wherein the display means (5) are adapted to display intermittently the number stored in encoded form in the selected numeric field, and the alphanumeric characters stored in encoded form in the text field associated with the selected numeric field.

7. Telephone apparatus as claimed in any of the preceding claims, wherein the display means (5) are adapted to indicate that no text is available if the text field associated with the selected numeric field contains an empty code.

8. Telephone apparatus as claimed in any of the preceding claims, wherein the display means (5) are adapted to indicate when the numeric fields do not contain a number in encoded form corresponding to the number identifying the source of the incoming call.

9. Telephone apparatus as claimed in any of the preceding claims, including means for registering the respective number of calls received from identifying numbers corresponding to the encoded numbers stored in the numeric fields.

10. Telephone apparatus as claimed in Claim 9, wherein the registering means comprises respectively for each numeric field an associated portion of said memory means.

11. Telephone apparatus as claimed in Claim 9 or Claim 10, wherein the display means (5) are adapted to display the number of calls received from a selected number stored in encoded form in the numeric fields.

## Patentansprüche

1. Telefonapparat (1) mit:
einer eine Mehrzahl von alphanummerischen Tasten (6a) aufweisenden Tastenkonsole (6), wobei mit den alphanummerischen Tasten (6a) jeweils mindestens zwei Zeichen assoziiert sind, von denen das eine ein nummerisches und das andere ein alphanummerisches Zeichen ist;
Speichermitteln (100) zur Speicherung einer Mehrzahl von Telefon-nummerdatensätzen, von denen jeder ein nummerisches Feld aufweist, um eine Telefonnummer in codierter Form zu speichern sowie ein Textfeld, um assoziierte alphanummerische Zeichen in codierter Form zu speichern;
sowie Anzeigemitteln (5);
bei dem in einem ersten Dateneingabemodus das mit einer der alphanummerischen Tasten assoziierte nummerische Zeichen in codierter Form in einem der nummerischen Felder gespeichert wird, und zwar in Antwort auf das Drücken der einen alphanummerischen Taste,und bei dem ferner in einem zweiten Eingabemodus das mit der einen genannten alphanummerischen Taste assoziierte alphanummerische Zeichen in codierter Form in einem der Textfelder gespeichert wird, und zwar in Antwort auf das Drücken der einen alphanummerischen Taste, wobei sich das eine nummerische Feld und das eine assoziierte Textfeld im selben Datensatz befinden, **dadurch gekennzeichnet,** daß der Apparat als tragbares Funktelefon ausgebildet ist und desweiteren Mittel enhält,
(i) um auf ein Signal zu antworten, das eine die Herkunft des eintreffenden und durch das Telefonnetzwerk automatisch gelieferten Anrufs kennzeichnende Nummer übermittelt, und zwar durch Auswahl des Telefonnummerdatensatzes aus den Speichermitteln, der im nummerischen Feld die codierte Nummer enthält, die mit der die Herkunft des eintreffenden Anrufs kennzeichnenden Nummer korrespondiert, und
(ii) um dann die in codierter Form im Textfeld des ausgewählten Datensatzes gespeicherten alphanummerischen Zeichen auf den Anzeigemitteln (5) darzustellen.

2. Telefonapparat nach Anspruch 1, bei dem die Tastenkonsole (6) ferner eine Funktionstaste (6b) aufweist, die in gedrücktem Zustand dazu dient zwischen den beiden Dateneingabemodi umzuschalten.

3. Telefonapparat nach Anspruch 1 oder 2, bei dem die Speichermittel (100) ferner einen Informationsdatensatz speichern, in dem Informationen über andere in den Speichermitteln (100) befindliche Datensätze enthalten sind.

4. Telefonapparat nach Anspruch 3, bei dem in einem ersten Byte des Informationsdatensatzes ein Wert für eine maximale Anzahl von in den Speichermitteln (100) speicherbaren Datensätzen gespeichert ist.

5. Telefonapparat nach Anspruch 4, bei dem der Informationsdatensatz zur Kennzeichnung von unbelegten und belegten Datensätzen ein Bitmuster enthält.

6. Telefonapparat nach irgendeinem der vorangegangenen Ansprüche, bei dem die Anzeigemittel (5) die im ausgewählten nummerischen Feld in codierter Form gespeicherte Nummer sowie die im mit dem ausgewählten nummerischen Feld assoziierten Textfeld in codierter Form gespeicherten alphanummeischen Zeichen periodisch anzeigen.

7. Telefonapparat nach irgendeinem der vorangegangenen Ansprüche, bei dem die Anzeigemittel (5) anzeigen, daß kein Text verfügbar ist, falls das mit dem ausgewählten nummerischen Feld assoziierte Textfeld leer ist.

8. Telefonapparat nach irgendeinem der vorangegangenen Ansprüche. bei dem die Anzeigemittel (5) anzeigen, wenn die nummerischen Felder keine in codierter Form vorliegende mit der Nummer zur Identifikation der Herkunft des eintreffenden Anrufs korrespondierende Nummer aufweisen.

9. Telefonapparat nach irgendeinem der vorangegangenen Ansprüche, mit Mitteln zur Registrierung der jeweiligen Anzahl von empfangenen Anrufen von kennzeichnenden mit den in den nummerischen Feldern gespeicherten codierten Nummern korrespondierenden Nummern.

10. Telefonapparat nach Anspruch 9, bei dem die Registriermitteljeweils für jedes nummerische Feld einen assoziierten Teil der genannten Speichermittel enthalten.

11. Telefonapparat nach Anspruch 9 oder 10, bei dem die Anzeigemittel (5) die Anzahl der Anrufe anzeigen, die von einer ausgewählten in den nummerischen Feldern in codierter Form gespeicherten Nummer empfangen wurden.

## Revendications

1. Appareil téléphonique (1) comprenant :
un pavé de touches (6) comprenant une pluralité de touches alphanumériques (6a) ; les touches alphanumériques (6a) ayant chacune au moins deux caractères associés à celle-ci, un desdits au moins deux caractères étant un caractère numérique et l'autre desdits au moins deux caractères étant un caractère alphanumérique ;
un moyen de mémoire (100) mémorisant une pluralité d'enregistrements de numéro de téléphone, chaque enregistrement de numéro de téléphone ayant une zone numérique pour mémoriser un numéro de téléphone sous forme codée et une zone de texte pour mémoriser des caractères alphanumériques associés sous forme codée ;
un moyen d'affichage (5) ;
dans lequel dans un premier mode d'entrée de données, le caractère numérique associé à une desdites touches alphanumériques est mémorisé sous forme codée dans une desdites zones numériques en réponse à l'enfoncement de ladite touche alphanumérique et dans un second mode d'entrée de données, le caractère alphanumérique associé à ladite touche alphanumérique est mémorisé sous forme codée dans une desdites zones de texte associée à ladite zone numérique en réponse à l'enfoncement de ladite touche alphanumérique, ladite zone numérique et ladite zone de texte associée étant dans le même enregistrement ;
caractérisé en ce que l'appareil est un radiotéléphone portable et comprend de plus un moyen
(i) prévu pour répondre à un signal acheminant un numéro d'identifiant la source d'un appel entrant délivré automatiquement par le réseau téléphonique en sélectionnant l'enregistrement de numéro de téléphone dans le moyen de mémoire qui contient, dans la zone numérique d'enregistrement sélectionnée, le numéro codé correspondant au numéro identifiant la source de l'appel entrant, et
(ii) afficher ensuite sur le moyen d'affichage (5) les caractères alphanumériques mémorisés sous forme codée dans la zone de texte pour l'enregistrement sélectionné.

2. Appareil téléphonique selon la revendication 1, dans lequel le pavé de touches (6) comprend également une touche de fonction (6b) qui peut être mise en oeuvre lorsqu'enfoncée pour commuter entre les deux modes d'entrée de données.

3. Appareil téléphonique selon la revendication 1 ou 2, dans lequel le moyen de mémoire (100) mémorise également un enregistrement d'informations contenant des informations concernant d'autres enregistrements dans le moyen de mémoire (100).

4. Appareil téléphonique selon la revendication 3, dans lequel un premier octet de l'enregistrement d'informations mémorise une valeur d'un nombre maximal d'enregistrements qui peuvent être mémorisés dans le moyen de mémoire (100).

5. Appareil téléphonique selon la revendication 4, dans lequel l'enregistrement d'informations comprend une table de correspondance pour indiquer des enregistrements non affectés et affectés.

6. Appareil téléphonique selon l'une quelconque des revendications précédentes, dans lequel les moyens d'affichage (5) sont prévus pour afficher par intermittence le numéro mémorisé sous forme codée dans la zone numérique sélectionnée et les caractères alphanumériques mémorisés sous forme codée dans la zone de texte associée à la zone numérique sélectionnée.

7. Appareil téléphonique selon l'une quelconque des revendications précédentes, dans lequel les moyens d'affichage (5) sont prévus pour indiquer qu'aucun texte n'est disponible si la zone de texte associée à la zone numérique sélectionnée contient un code vide.

8. Appareil téléphonique selon l'une quelconque des revendications précédentes, dans lequel les moyens d'affichage (5) sont prévus pour indiquer lorsque les zones numériques ne contiennent pas un numéro sous forme codée correspondant au numéro identifiant la source de l'appel entrant.

9. Appareil téléphonique selon l'une quelconque des revendications précédentes, incluant un moyen pour enregistrer le nombre respectif d'appels reçus à partir des numéros d'identification correspondant aux numéros codés mémorisés dans les zones numériques.

10. Appareil téléphonique selon la revendication 9, dans lequel le moyen d'enregistrement comprend respectivement pour chaque zone numérique une partie associée dudit moyen de mémoire.

11. Appareil téléphonique selon la revendication 9 ou la revendication 10, dans lequel les moyens d'affichage (5) sont prévus pour afficher le nombre d'appels reçus à partir d'un numéro sélectionné mémorisé sous forme codée dans les zones numériques.
